# EUROPEAN PATENT SPECIFICATION

(11) **EP 2 432 201 B1**
(45) Date of publication and mention of the grant of the patent: **02.01.2019**
(21) Application number: 10177498.2
(22) Date of filing: 17.09.2010
(51) Int. Cl.: H04M 1/725, H04L 29/08

(54) **Mobile wireless communications device including wireless-based availability detector and associated methods**
Mobile drahtlose Kommunikationsvorrichtung mit einer Verfügbarkeitserkennung auf Funkbasis und zugehörige Verfahren
Dispositif de communication mobile sans fil incluant un détecteur sans fil de disponibilité et procédés associés

(43) Date of publication of application: 21.03.2012
(73) Proprietor: BlackBerry Limited, Waterloo, ON N2K 0A7 (CA)
(72) Inventor: Griffin, Jason Tyler, Waterloo Ontario N2L 3W8 (CA); Walker, David Ryan, Waterloo Ontario N2L 3W8 (CA); Gillani, Karim, Waterloo Ontario N2K 0A2 (CA)
(74) Representative: Fennell, Gareth Charles

(56) References cited:
- WO-A1-2009/146250
- WO-A1-2010/018468
- US-A1- 2005 021 773

## Description

### Technical Field

This application relates to the field of wireless communications, and more particularly, to wireless communications devices that communicate an availability status to their respective wireless networks and associated methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow users to send and receive electronic mail (email) messages wirelessly and access the internet via a cellular network and/or a wireless local area network (WLAN), for example. In addition, these devices may allow users to send Short Messaging Service (SMS) messages, Personal Identification Number (PIN) messages, and instant messages.

In some situations, a sender may desire a quick answer or response to a message that the sender has sent to a recipient, but may not receive it in a timely fashion because the recipient was unavailable. Had the sender known of the recipient's unavailability to provide a quick answer before sending the message, the sender may have chosen to not send the message, or may have chosen to contact the recipient via in alternate method (i.e. send an e-mail instead of a SMS or PIN message), which would have saved time and effort.

While some devices allow a user to manually set an availability status to be broadcast to the wireless network (which in turn broadcasts it to that user's contacts) via a keypad or trackball, somewhat alleviating the above situation by informing the user's contacts of the user's availability status, situations may occur where the user forgets (or does not have the time) to manually update their availability status.

International patent application no. WO 2010018468 describes a personal function pad that includes a surface that receives and supports a wireless terminal without making a direct electrical contact with the wireless terminal, and a near field communications (NFC) module that receives a first NFC signal from the wireless terminal and responsively transmits a second NFC signal to the wireless terminal. The second NFC signal modifies a setting and/or initiates a function of the wireless terminal. A wireless terminal according to some embodiments includes a controller and an NFC communications module. The NFC module transmits a first NFC signal and receives a second NFC signal in response to the first NFC signal. The controller modifies a device setting and/or to initiates a device function of the wireless terminal in response to the second NFC signal.

International patent application no. WO 2009146250 describes a cellular or wireless mobile device that includes a one or more sensors and a processor configured with software to receive data from the one or more sensors, calendar data and device settings, compare sensor, calendar, device settings data, and an authorization level of a requesting user to avatar selection criteria, and select an avatar based upon the comparison. By correlating sensor data, calendar data and device settings to a user's current status, the avatar selection criteria enables a processor to automatically select an avatar that reflects the user's current status. Others then can be informed of the user's current status by accessing the user's avatar.

Therefore, further improvements in wireless communications devices capable of communicating an availability status to the wireless network are desirable.

### Brief Description of the Drawings

FIG. 1 is a schematic block diagram of a wireless communications system in accordance with the present disclosure.
FIG. 2 is a schematic block diagram of another embodiment of a wireless communications system in accordance with the present disclosure.
FIG. 3 is a front view of a first wireless communications device of FIG. 2 communicating with a computer workstation via a Bluetooth™ connection.
FIG. 4 is a front view of a second wireless communications device of FIG. 2 displaying an availability status message based upon the Bluetooth™ connection between the first wireless communications device and the computer workstation.
FIG. 5 is a front view of a first wireless communications device of FIG. 2 communicating with a computer workstation via a NFC connection.
FIG. 6 is a front view of a second wireless communications device of FIG. 2 displaying an availability status message based upon the NFC connection between the first wireless communications device and the computer workstation.
FIG. 7A is a front view of a first wireless communications device of FIG. 2 communicating with a GPS transmitter and associating the geospatial location of the wireless communications device with a user availability status.
FIG. 7B is a front view of the wireless communications device of FIG. 7A communicating with a GPS transmitter and associating a user status message with the geospatial location of the wireless communications device.
FIG. 8 is a front view of the second wireless communications device of FIG. 2 displaying an availability status message based upon the geospatial location of the first wireless communications device.
FIG. 9 is a front view of the second wireless communications device of FIG. 2 displaying an availability status message, via a social networking site, based upon the geospatial location of the first wireless communications device.
FIG. 10 is a high-level block diagram showing basic components of a portable wireless communications device that can incorporate the functionality for either device-to-device communication or a device-tag communication in accordance with a non-limiting aspect as shown in FIGS. 1-8.

### Detailed Description

Different embodiments will now be described more fully hereinafter with reference to the accompanying drawings, in which various embodiments are shown. Many different forms can be set forth and described embodiments should not be construed as limited to the embodiments set forth herein. Rather, these embodiments are provided so that this disclosure will be thorough and complete. Like numbers refer to like elements throughout, and prime notation is used to indicate similar elements in different embodiments.

According to the invention, a wireless communication system according to claim 1, a wireless communication device according to claim 7 and a method of using a wireless communication device according to claim 10 are defined.

Advantageous embodiments are defined in the dependent claims.

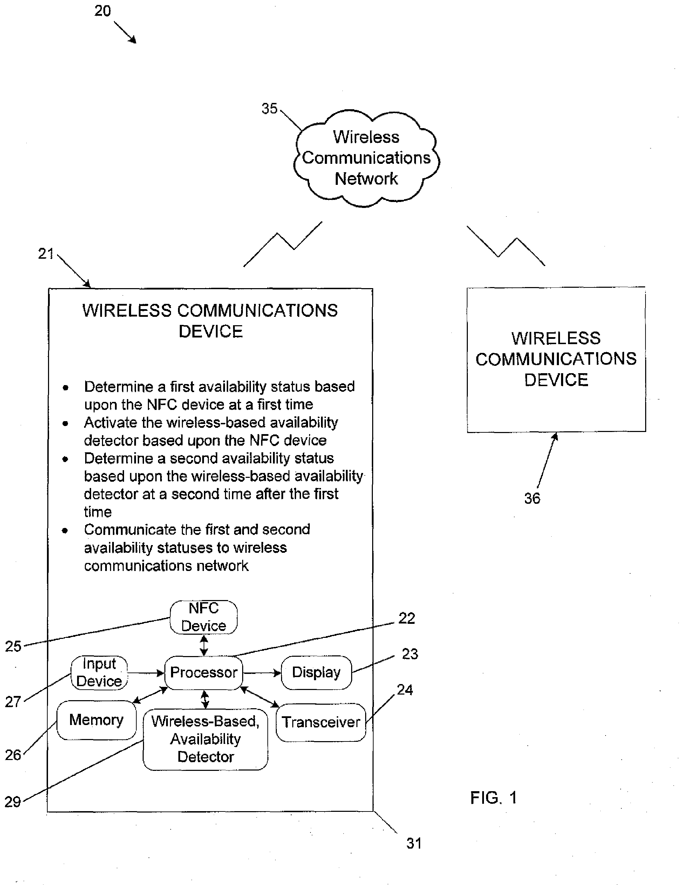

Referring initially to FIG. 1, a wireless communications system **20** is now described. The wireless communications system **20** includes a wireless communications network **35** and first and second wireless communications devices **21, 36,** each configured to communicate via the wireless communications network. The wireless communications network **35** may comprise a cellular network capable of both voice and data transmission.

The first wireless communications device **21** includes a portable housing **31,** a transceiver **24** (e.g. a wireless transceiver), and a Near Field Communications (NFC) device **25** carried by the portable housing. A wireless-based, availability detector **29** is carried by the portable housing **31,** in addition to a memory **26,** an input device **27,** and a display **23.**

The memory **26** may comprise volatile memory, such as RAM, or non-volatile memory, such as flash RAM or a hard drive. The input device **27** may comprise a keyboard, a thumbwheel, trackpad, or a trackball, for example. The input device **27** may also comprise a microphone. In some applications, the display **23** may comprise a touch sensitive screen and may therefore also serve as the input device **27** (or as an additional input device).

A processor **22** is carried by the portable housing **31** and is configured to determine a first availability status, such as a user-availability status, based upon the NFC device **25** at a first time. The processor **22** then activates the wireless-based availability detector **29** based upon the NFC device, and thereby determines a second availability status, such as a user-availability status, based upon the wireless-based availability detector **29** at a second time after the first time. By this, it is meant that the wireless-based availability detector **29** is activated in response to activation of the NFC device **25.**

The processor **22** is further configured to communicate the first and second availability statuses to the wireless communications network **35** via the wireless transceiver **24.** By "wireless-based," it is meant that the user availability detector **29** is used by the processor **22** to determine availability based upon a wireless communication between the wireless-based user availability detector **29** and another device.

It should be understood that availability may refer to user availability with respect to any number of clients or applications, such an e-mail account, instant messaging client, social networking client, or a calendar client associated with the wireless communications device **21,** for example. Availability may also refer to user availability with respect to one or more user contacts. In some applications, availability may also refer to device availability with respect to any number of clients or applications, as well as device availability with respect to one or more user contacts.

The wireless network **35** then illustratively selectively communicates the first and second availability statuses to the second wireless communications device **36** at the first and second times, respectively; however, the wireless network may also selectively communicate the availability status to any number of wireless communications devices, wireless or wired.

This advantageously allows a user of the second wireless communications device **36** to be aware of whether other users are available for messaging, such as SMS messaging, or to receive phone calls. Further, this allows a user of the first wireless communications device **21** who wishes his availability status to be broadcast to do so. This broadcasting of the availability status may reduce traffic on the wireless communications network **35** by decreasing call volume, for example, or by precluding similar messages from being sent via multiple message methods.

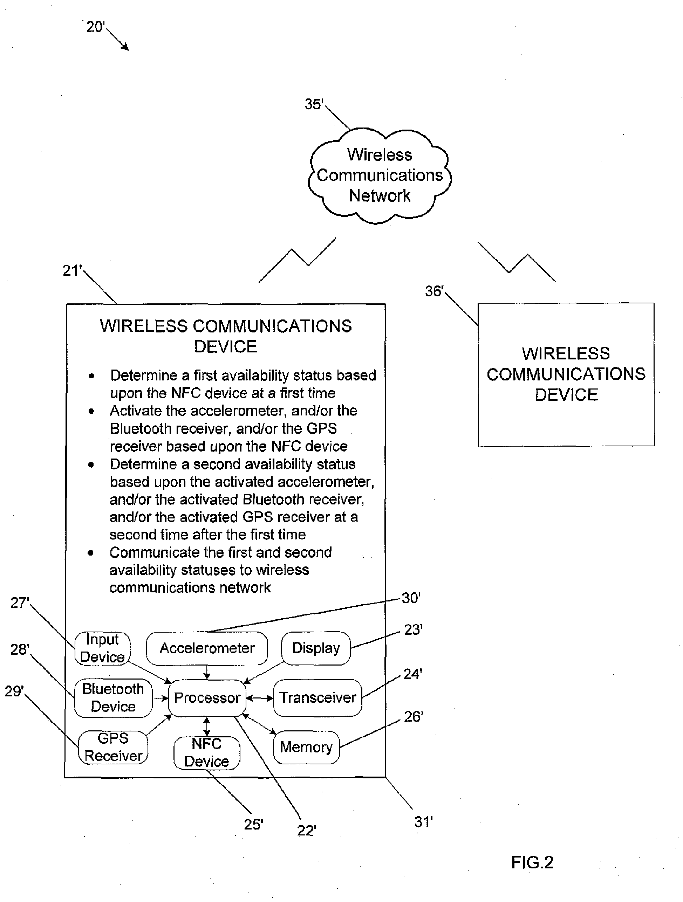

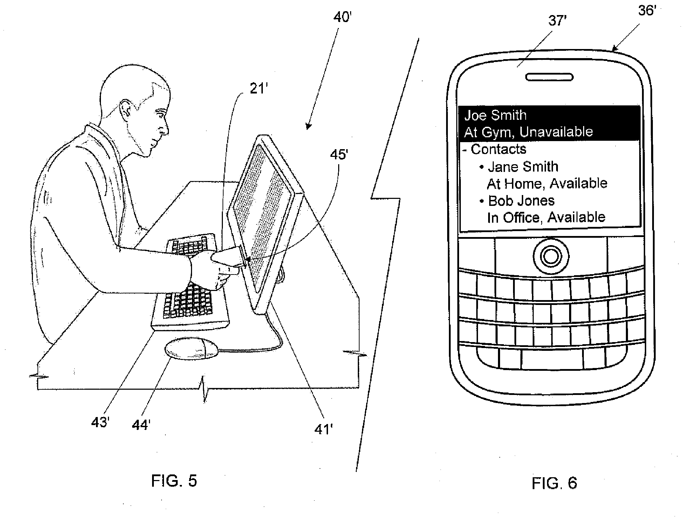

With additional reference to FIGs. 2, 5, and 6, the NFC device **25'** cooperates with a NFC tag **45'** so that the first availability status is based upon an initial proximity therebetween. As illustrated in FIG. 5, the NFC tag **45'** is affixed to a workstation **40'.** When the first wireless communications device **21'** is positioned adjacent the NFC tag **45',** the first availability status is set and communicated to the wireless communications network **35',** which in turn communicates it to the second wireless communications device **36'** (FIG. 6). The second wireless communications device **36'** is displaying on its display **37'** the availability status of Bob Jones, who is using the first wireless communications device **21'.**

Here, the availability status is "In Office, Available." It should be noted that different NFC tags **45'** may be associated with different availability statuses. For example, the workstation **40'** (or the desk upon which it rests, or any other surface) may carry multiple NFC tags **45',** each associated with a different availability status. A desired availability status may thus be communicated to the wireless communications network **35'** by briefly placing the wireless communications device **21'** adjacent the appropriate NFC tag **45'.** Additionally, when the first wireless communications device **21'** is positioned adjacent to the NFC tag **45',** the wireless-based availability detector **29'** is activated. The wireless-based availability detector **29'** is used to detect when the current first availability status is no longer relevant and uses the second availability status to notify the second wireless communications device **36'** of this change. The second availability status may clear the current status, or revert to a default availability status.

Continuing with the above example, when the first wireless communications device **21'** is positioned adjacent to the NFC tag **45'** a Bluetooth link was established between the first wireless communications device **21'** and the workstation **40'** by the wireless-based availability detector **29.** When the first wireless communications device 21' is moved out of Bluetooth communication range, the Bluetooth link is broken thus updating the second availability status to indicate the first wireless communications device **21',** or the user thereof, is "Out of the Office", which is communicated to the second wireless communications device **36'** (FIG. 6).

The wireless communications devices **21', 36'** may alter operation of applications being executed thereby based upon the availability statuses. For example, a user of the wireless communications device **36'** may have a 9:00 AM calendar meeting scheduled with a user of the wireless communications device **21'.** If, at 9:00 AM, the wireless communications device **36'** is in proximity to the wireless communications device **21',** the wireless communications device **36'** may not display a meeting reminder, as the proximity with the wireless communications device **21'** may indicate that both users have met and are conducting the meeting.

Similarly, NFC tags may be placed on common items in an office, such as a desk telephone or fax machine, such that the wireless communications device **21'** "knows" when it is in the office. This may be used to change the behavior of the wireless communications device **21',** or of other devices in the office. For example, if the wireless communications device **21'** has a calendar meeting set for 9:00 AM, the wireless communications device may communicate with the desk telephone via Bluetooth or a wireless network to instruct the desk telephone to deactivate its ringer during the meeting.

In addition, other devices in the office may recognize the wireless communications device **21'** and may change their behavior based upon proximity therewith. For example, a time clock may "punch" a user in when the wireless communications device **21'** is nearby for the first time that day.

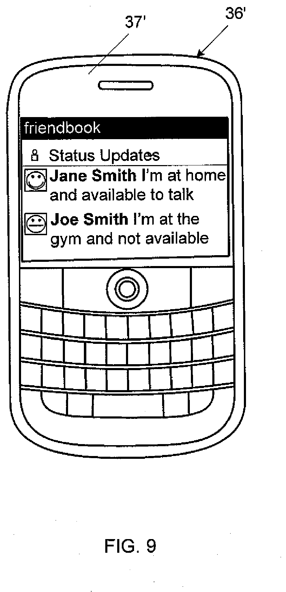

In some applications, the first wireless communications device **21'** may transmit the first and second availability statuses, via the wireless communications network **35',** to a social networking site such as Facebook™, Twitter™, or MySpace™, etc. The first and second availability statuses may also be transmitted to messaging applications, such as Blackberry Messenger™, Yahoo Messenger™, AOL Instant Messenger ™, and Google Talk™. The second mobile wireless communications device **36'** may then access the social networking site, and display the availability status as received via the social networking site. For example, the mobile wireless communications device **36'** of FIG. 9 is displaying a social networking site, and, in particular, the status updates of contacts on that social networking site. Here, the availability status for Jane Smith is displayed, and states "I'm at home and available to talk." Likewise, the availability status for Joe Smith is displayed, and states that "I'm at the gym and not available."

The broadcasting of the availability status to a social networking site can be particularly advantageous because such social networking sites may be accessed via computer, and do not require a mobile wireless communications device. In addition, some contacts on a social networking site may not have the telephone number of the mobile wireless communications device **21',** yet can still learn the availability status. Further, some users update one or more social networking sites multiple times daily, and this functionality could make the process of performing those updates easier.

In one non-limiting example, the NFC device **25'** and NFC tag **45'** each include a magnet and an environment sensor such as a Hall Effect sensor. Each is matched in a single touch or gesture, also termed a "kiss" gesture because the wireless communications device **21'** and the NFC tag **45'** typically touch or "kiss" each other or in adjacent proximity. An example could be in the range of approximately less than 10 or approximately 20 mm, depending on the strength of the magnets, and in one example, when it is about 7 mm or less from the tag or wireless communications device **21'.** For example, during this kiss gesture, the NFC device **25'** detects the magnet of the NFC tag **45'** via the Hall Effect, and a signal or voltage variation from the Hall Effect sensor is transmitted to the processor **22',** which activates an NFC communications link between the NFC device **25'** and the NFC tag **45'.**

An advantage of such system that uses the Hall Effect to initiate a NFC communications link is that such a configuration is more power efficient than leaving the NFC device **25'** "on" prior to initiation of the NFC communications link. When the wireless communications device **21'** determines the presence of another magnet such as on the NFC tag **45',** the processor **22'** will trigger the initiation of a wireless NFC connection. An additional benefit is that the Hall Effect generally requires adjacent proximity, meaning that a deliberate "gesture" is involved, such as touching the two communications devices together. This avoids accidental or invasive connections when other NFC enabled devices are in the area. In various embodiments, the Hall Effect need not be utilized and that the wireless-based, availability detector **25'** may function using a NFC communications link.

NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

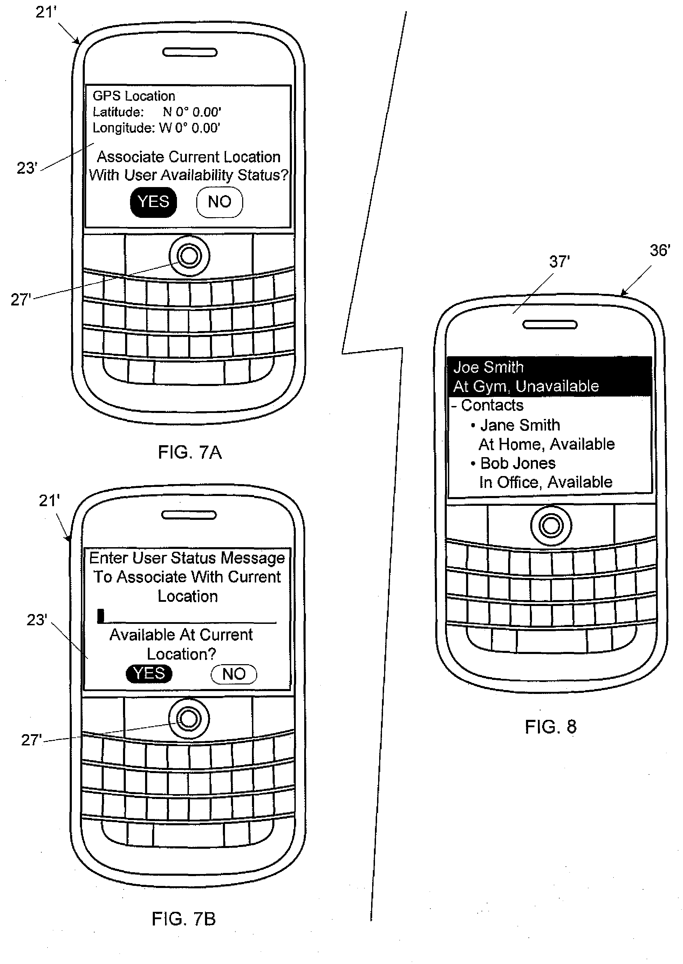

Referring again to FIG. 2 and additionally to FIGS. 7A-7B, the wireless-based, availability detector may comprise a Global Positioning Satellite (GPS) receiver **29'** so that the second availability status is based upon a geospatial position of the wireless communications device **21,** although it may be other devices. In addition, the first wireless communications device **21'** and GPS receiver **20'** may be configured to permit association of the one geospatial position with a given availability status via the input device **27'.** For example, the first wireless communications device **21'** may display its current geospatial location on the display **23',** and query the user whether the current geospatial location should be associated with a user availability status (FIG. 7A). The first wireless communications device **21'** may then query the user as to a status message to associate with the current location, and whether a availability status of available or unavailable should be associated with the current location (FIG. 7B). This enables the first wireless communications device **21'** to update the availability status as the first wireless communications device **21'** moves around. By configuring the wireless communications device **21'** as shown in FIGS. 7A-7B, the desired availability status for a given geospatial location is transmitted to the wireless communications network **35'** without further input required from a user.

The second wireless communications device **36'** in FIG. 8 is displaying the availability of Bob Jones on its display **37'** as "In Office, Available," based upon the geospatial location of Bob Jones's wireless communications device, the first wireless communications device **21'.** It should be understood that the status message may be a more detailed description of the availability or unavailability, for example stating "At Gym," "At Home," "In Car," or "In Office," (FIG. 8).

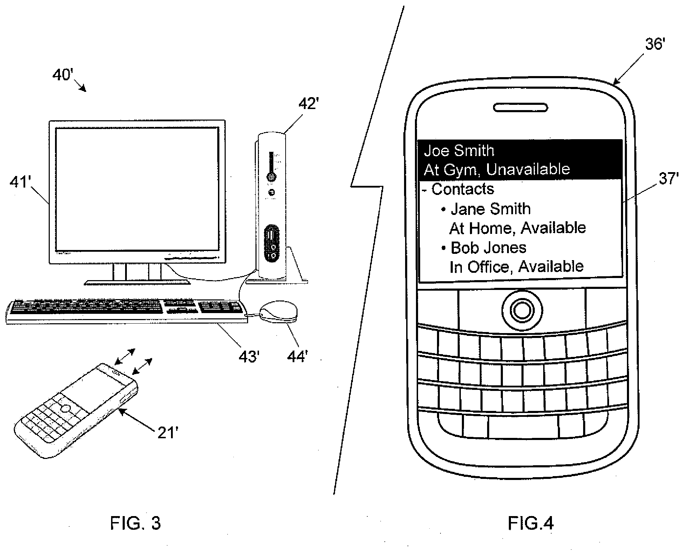

Referring again to FIG. 2 and additionally to FIG. 3, the wireless-based, availability detector may also comprise a Bluetooth™ device **28'.** The wireless communications network **35'** may include a Bluetooth™ device carried within the housing **42'** of the workstation **40'** that cooperates with the Bluetooth™ device **28'** so that the second availability status is based upon a communications link therebetween. For example, when the wireless communications device **21'** is moved within range of the Bluetooth™ device of the workstation **40',** a communications link therebetween may be established. The second availability status is based upon the presence of this Bluetooth™ communications link. Therefore, when the first wireless communications device **21'** is moved beyond range of Bluetooth™ communications, the communications link is severed, and the second availability status is changed. As shown in Fig. 3, the wireless communications device **21'** is communicating with the workstation **40'** via a Bluetooth™ link and broadcasting a availability message based thereon to the wireless communications network **35'.** The wireless communications network **35'** is in turn selectively broadcasting the second availability message to the second wireless communications device **36'.** The second wireless communications device **36'** displays the status of Bob Jones on the display **37'** as being "In Office, Available" based upon the Bluetooth™ communications link. When this link is severed, the first wireless communications device **21'** may transmit a availability status of "Unavailable" to the network.

It should also be appreciated that the second availability status need not be based upon an actual Bluetooth™ communications link, but may instead be based upon detection of the Bluetooth™ signal without the establishment of a communications link.

Referring again to FIG. 2, an accelerometer **30'** may be carried by the housing and may be coupled to the processor **22'.** The processor **22'** may then be configured to determine the second availability status based upon the accelerometer **30'.** For example, if the accelerometer **30'** detects that the wireless communications device **21'** is accelerating and thus in a car, bus, or train, the processor **22'** may determine the second availability status based thereupon. For example, the wireless communications device **21'** may be programmed to broadcast an unavailable availability status to the wireless communications network **35'** when it (and therefore the user) is in a car or a train. It should be understood that the processor **22'** may determine the second availability status based upon more than one of the Bluetooth™ device **28',** the GPS receiver **29',** and the accelerometer **30'.**

In some applications, the processor **22'** of the wireless communications device **21'** may change an availability field or a status field in an application stored in the memory **26'** of the device or being executed. For example, the processor **22'** may change a status or an availability of the device on an instant messaging client based upon an availability detector, such as the NFC device **25',** Bluetooth device **28',** or accelerometer **30',** as described above.

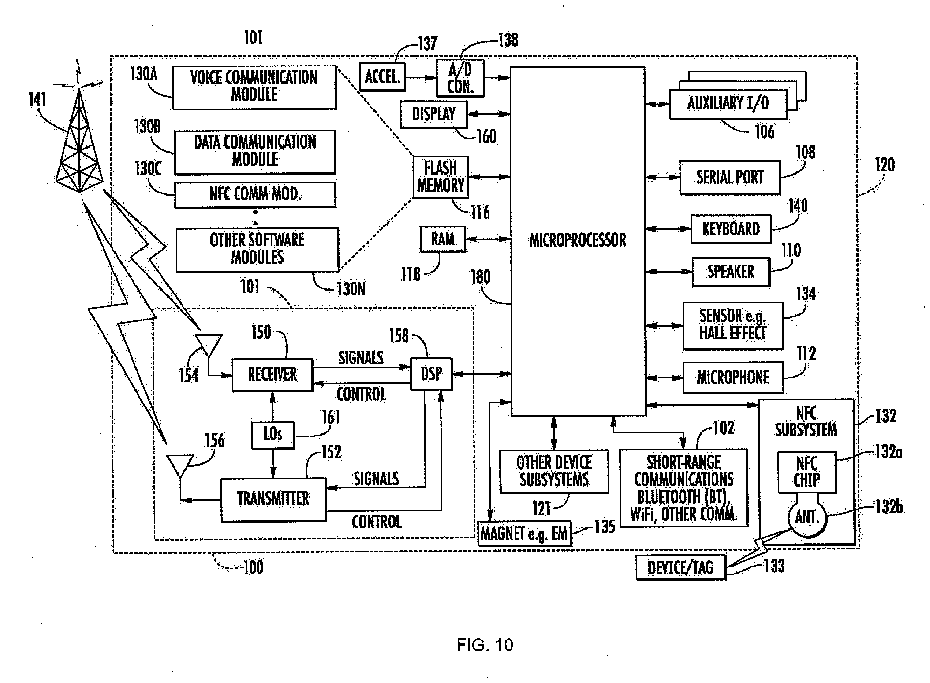

A non-limiting example of various functional components that can be used in the example mobile wireless communications device **21** or **21'** is further described in the example below with reference to FIG. 10. New reference numerals are used. Device **100** is an example embodiment of devices **21, 21'** and **36, 36'.** The device **100** illustratively includes a housing **120,** a keyboard **140** and a display **160.** The display **160** may comprise a full graphic LCD and may be touch sensitive as an input device. Other types of output devices may alternatively be used. A microprocessor **180** is contained within the housing **120** and is coupled between the keypad **140** and the display **160.** This device **180** is typically a microprocessor chip contained on a circuit board in the housing **120.** If the display is a touch-activated display, the keypad **140** may not be necessary. The processing device **180** controls the operation of the display **160,** as well as the overall operation of the mobile device **100,** in response to actuation of keys on the keypad **140** by the user.

The housing **120** may be elongated vertically, or may take on other sizes and shapes (including clamshell housing structures). The keypad may include a mode selection key, or the device may include other hardware or software for switching between text entry and telephony entry.

In addition to the processing device **180,** other parts of the mobile device **100** are shown schematically in FIG. 10. These include a communications subsystem **101;** a short-range communications subsystem **102;** the keypad **140** and the display **160,** along with other input/output devices **106, 108, 110** and **112;** as well as memory devices **116, 118** and various other device subsystems **121.** The mobile device **100** is in this example a two-way RF communications device having voice and data communications capabilities using RF circuitry. In addition, the mobile device **100** has the capability to communicate with other computer systems via the Internet. The short-range communications subsystem **102** includes a Bluetooth™ communications module for establishing a Bluetooth™ wireless connection and other communications modules such as an infrared module or device, WiFi circuit and module, and associated components and circuits as part of RF circuitry.

Operating system software executed by the processing device **180** may be stored in a persistent store, such as the flash memory **116,** or may be stored in other types of memory devices, such as a read only memory (ROM) or similar storage element. In addition, system software, specific device applications, or parts thereof, may be temporarily loaded into a volatile store, such as the random access memory (RAM) **118.** Communications signals received by the mobile device may also be stored in the RAM **118.**

The processing device **180,** in addition to its operating system functions, enables execution of software applications **130a-130n** on the device **100.** A predetermined set of applications that control basic device operations, such as data and voice communications **130a** and **130b,** may be installed on the device **100** during manufacture. A Near Field Communications module **130C** is also installed as illustrated.

The NFC communications module **130c** as a software module cooperates with the microprocessor **180** through the flash memory **116.** The microprocessor **180** operates also with the NFC subsystem **132** that includes a NFC chip **132a** and antenna **132b** that communicates with another device/tag **133** such as the type shown in FIGS. 1-9. The NFC communications module **130c** allows the microprocessor to control the NFC subsystem **132,** which includes the NFC chip **132a** and antenna **132b** that is tuned typically for 13.56 MHz. The NFC chip **132a** could be, for example, a PN531 microcontroller-based transmission module from the Phillips Semiconductor Branch of Koninklijke Phillips Electronics N.V. When the NFC chip is a PN531 module, the NFC chip **132a** could include analog circuitry and a contact list Universal Asynchronous Receiver Transmitter (UART), a core and a set of host interfaces. The analog circuitry could include an output driver, an integrated demodulator, a bit decoder, a mode detector and an RF-level detector. The contact list UART could include elements for data processing, Cyclical Redundancy Checking (CFC), parity generation, framing generation and check bit coding and decoding. The core typically includes an 80C51 microcontroller, 32 Kbyte of ROM and one Kbyte of RAM. A set of host interfaces can interface with the microprocessor and interface according to such known standards as I2C, serial UART, SPI and USB.

There is also illustrated the magnetic sensor **134** that could be formed as a Hall Effect sensor and is connected to the microprocessor **180.** It includes the various components that operate as a Hall Effect sensor, including any necessary coils or other circuits. There is also illustrated a magnet **135** that, in one example, is formed as an electromagnet and operates with the microprocessor to allow a different communications pathway using electromagnetic energy that is changed to correspond to changing data. The electromagnet **135** operates similar to the magnet **24** as shown in the mobile wireless communications device in FIGS. 1-9, but operates, in one example, to form another communications protocol pathway. This electromagnet **135** has different functions, including working as an active or passive device in association with other components of the device **100** as illustrated. For example, when the electromagnet **135** is used in place of an installed magnet (non-electromagnetic) in the devices of FIG. 10, a pulse of energy is delivered to the Hall Effect sensor in the other device. The other device receives the pulse and establishes a Bluetooth™ connection without going through activation of the NFC circuit. A WiFi connection, for example, in the alternative is established if a Bluetooth™ connection is not established. Other software modules **130n** include software that interoperates with the magnetic sensor **134** and any magnet or electromagnet **135** or other magnetic circuitry that are included within the overall electromagnet **135.** In accordance with various embodiments, the magnetic sensor **134** is optional.

An accelerometer **137** and an analog/digital converter **138** are connected to the microprocessor 180 as illustrated and allow another implementation of the NFC automatic tag detection (and automatic peer-to-peer detection). The accelerometer **137** recognizes the tapping of a communications device against a tag or another device, i.e., recognizes the vibrations. Instead of using the Hall Effect sensors and magnets to wake up the NFC circuit, the circuit uses tap recognition, for example, as a vibration sensor and accelerometer in this example. It should be understood that when the device is tapped against another object, for example, an NFC tag, a profile is generated as a matter of certain accelerometer parameters being met or exceeded. If the profile is compared against a known tap profile, it will wake the NFC circuit and initiate communication. In other embodiments, the accelerometer could be part of a motion sensor system and other motion sensor systems other than an accelerometer could be used such as a cadence sensor or cadence detection system.

An accelerometer comprises a sensor which converts acceleration from motion (e.g., movement of the communications device or a portion thereof due to the strike force) and gravity which are detected by a sensing element into an electrical signal (producing a corresponding change in output) and is available in one, two or three axis configurations. Accelerometers may produce digital or analog output signals depending on the type of accelerometer. Generally, two types of outputs are available depending on whether an analog or digital accelerometer is used: (1) an analog output requiring buffering and analog-to-digital (A/D) conversion; and (2) a digital output which is typically available in an industry standard interface such as an SPI (Serial Peripheral Interface) or I2C (Inter-Integrated Circuit) interface. The embodiment shown in FIG. 10 illustrates an analog output into the A/D converter **138.** The output of an accelerometer is typically measured in terms of the gravitational acceleration constant at the Earth's surface, denoted *g*, which is approximately 9.81 m/s² (32.2 ft/s²) as the standard average. The accelerometer may be of almost any type including, but not limited to, a capacitive, piezoelectric, piezoresistive, or gas-based accelerometer. The range of accelerometers varies up to the thousands of *g*'s, however for portable electronic devices "low-*g*" accelerometers may be used. Example low-*g* accelerometers which may be used are MEMS digital accelerometers from Analog Devices, Inc. (ADI), Freescale Semiconductor, Inc. (Freescale) and STMicroelectronics N.V. of Geneva, Switzerland.

The operational settings of the accelerometer, in one example, are controlled using control signals sent to the accelerometer via a serial interface. In one illustrated example, the microprocessor determines the motion detection in accordance with the acceleration measured by the accelerometer. Raw acceleration data measured by the accelerometer, in another example, is sent to the microprocessor via a serial interface where motion detection is determined by the operating system or other software module. In other embodiments, a different digital accelerometer configuration could be used, or a suitable analog accelerometer and control circuit could be used.

In addition, a personal information manager (PIM) application may be installed during manufacture. The PIM is capable of organizing and managing data items, such as email, calendar events, voice mails, appointments, and task items. The PIM application is also capable of sending and receiving data items via a wireless network **141.** The PIM data items are seamlessly integrated, synchronized and updated via the wireless network **141** with the device user's corresponding data items stored or associated with a host computer system.

Communication functions, including data and voice communications, are performed through the communications subsystem **101,** and possibly through the short-range communications subsystem **120,** which are part of RF circuitry contained on a circuit board typically as shown by the outline. The communications subsystem **101** includes a receiver **150,** a transmitter **152,** and one or more antennae **154** and **156.** In addition, the communications subsystem **101** also includes a processing module, such as a digital signal processor (DSP) **158,** and local oscillators (LOs) **161** as part of RF circuitry in this example. The specific design and implementation of the communications subsystem **101** is dependent upon the communications network in which the mobile device **100** is intended to operate. For example, the mobile device **100** may include a communications subsystem **101** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be used with the mobile device **100.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically utilizes a subscriber identity module, commonly referred to as a SIM card, in order to operate on a GPRS network.

When required network registration or activation procedures have been completed, the mobile device **100** sends and receives communications signals over the communication network **141.** Signals received from the communications network **141** by the antenna **154** are routed to the receiver **150,** which provides for signal amplification, frequency down conversion, filtering, channel selection, etc., and may also provide analog to digital conversion. Analog-to-digital conversion of the received signal allows the DSP **158** to perform more complex communications functions, such as demodulation and decoding. In a similar manner, signals to be transmitted to the network **141** are processed (e.g., modulated and encoded) by the DSP **158** and are then provided to the transmitter **152** for digital to analog conversion, frequency up conversion, filtering, amplification and transmission to the communication network **141** (or networks) via the antenna **156.**

In addition to processing communications signals, the DSP **158** provides for control of the receiver **150** and the transmitter **152.** For example, gains applied to communications signals in the receiver **150** and transmitter **152** may be adaptively controlled through automatic gain control algorithms implemented in the DSP **158.**

In a data communications mode, a received signal, such as a text message or web page download, is processed by the communications subsystem **101** and is input to the processing device **180.** The received signal is then further processed by the processing device **180** for an output to the display **160,** or alternatively to some other auxiliary I/O device **106.** A device user may also compose data items, such as e-mail messages, using the keypad **140** and/or some other auxiliary I/O device **106,** such as a touchpad, a trackball, a trackpad, a rocker switch, a thumb-wheel, or some other type of input device. The composed data items may then be transmitted over the communications network **141** via the communications subsystem **101.**

In a voice communications mode, overall operation of the device is substantially similar to the data communications mode, except that received signals are output to a speaker **110,** and signals for transmission are generated by a microphone **112.** Alternative voice or audio I/O subsystems, such as a voice message recording subsystem, may also be implemented on the device **100.** In addition, the display **160** may also be used in voice communications mode, for example to display the identity of a calling party, the duration of a voice call, or other voice call related information and whether there are NFC communications or a Bluetooth™ connection.

Any short-range communications subsystem enables communication between the mobile device **100** and other proximate systems or devices, which need not necessarily be similar devices. For example, the short-range communications subsystem may include an infrared device and associated circuits and components as described above, or a Bluetooth™ communications module to provide for communication with similarly-enabled systems and devices as well as the NFC communications.

## Claims

1. A wireless communications system (20) comprising:
a wireless communications network (35);
at least one Near Field Communications "NFC" tag (45') associated with a device (40'); and
a plurality of wireless communications devices, (21, 36) each configured to communicate via said wireless communications network,
at least one of said plurality of wireless communications devices (21) comprising:
a portable housing (31),
a wireless transceiver (24) carried by said portable housing,
a Near Field Communications "NFC" device (25) carried by said portable housing,
a Bluetooth wireless-based availability detector (29) carried by said portable housing, and
a processor (22) carried by said portable housing and configured to:
determine a first availability status based upon said NFC device at a first time, wherein the first availability status is based upon a momentary proximity between a NFC tag (45') associated with a device (40') and said NFC device (25) carried by said portable housing,
activate said Bluetooth wireless-based availability detector based upon said NFC device,
determine a second availability status based upon said Bluetooth wireless-based availability detector, said second availability status being based upon a Bluetooth wireless communication between the wireless-based, availability detector (29) and the device (40') at a second time after the first time, and
communicate the first availability status and the second availability status to said wireless communications network via said wireless transceiver.

2. The wireless communications system (20) according to Claim 1, wherein said wireless communications network (35) is configured to communicate the first availability status and the second availability status to at least one other wireless communications device (21, 36).

3. The wireless communications system (20) according to Claim 1, wherein said wireless communications network (35) is configured to communicate the first availability status and the second availability status to a social networking site.

4. The wireless communications system (20') according to Claim 1, further comprising a Global Positioning Satellite, GPS, receiver (29') to determine the geospatial position of said wireless communications device (21').

5. The wireless communications system (20') according to Claim 4, wherein said at least one wireless communications device (21') further comprises at least one input device (27') carried by said portable housing (31'); and wherein said Bluetooth wireless-based availability detector is configured to cooperate with said at least one input device to permit association of the at least one geospatial position with the second availability status.

6. The wireless communications system (20') according to Claim 1, further comprising an accelerometer (30') carried by said housing (31') and coupled to said processor (22').

7. A wireless communications device (21, 36) for communication with a wireless communications network (35) comprising:
a portable housing (31);
a wireless transceiver (24) carried by said portable housing;
a Near Field Communications NFC, device (25) carried by said portable housing;
a Bluetooth wireless-based availability detector (29) carried by said portable housing; and
a processor (22) carried by said portable housing and configured to
determine a first availability status based upon said NFC device at a first time, wherein the first availability status is based upon a momentary proximity between a NFC tag (45') associated with a device (40') and said NFC device (25) carried by said portable housing,
activate said Bluetooth wireless-based availability detector based upon said NFC device,
determine a second availability status based upon said Bluetooth wireless-based availability detector, said second availability status being based upon a Bluetooth wireless communication between the wireless-based availability detector (29) and the device (40') at a second time after the first time, and
communicate the first availability status and the second availability status to said wireless communications network via said wireless transceiver.

8. The wireless communications device (21, 36) according to Claim 7, further comprising a Global Positioning Satellite, GPS, receiver (29') to determine the geospatial position of said wireless communications device.

9. The wireless communications device (21, 36) according to Claim 8, wherein said at least one wireless communications device further comprises at least one input device (27) carried by said portable housing (31); and wherein said Bluetooth wireless-based availability detector (29) is configured to cooperate with said at least one input device to permit association of the at least one geospatial position with the second availability status.

10. A method of using a wireless communications device (21, 36) comprising a processor (22), and a wireless transceiver (24), a Near Field Communications, NFC, device (25), and a Bluetooth wireless-based availability detector (29) coupled thereto, the method comprising:
determining, using the processor, a first availability status based upon the NFC device at a first time, wherein the first availability status is based upon a momentary proximity between a NFC tag (45') associated with a device (40') and said NFC device (25);
activating, using the processor, the Bluetooth wireless-based availability detector based upon the NFC device;
determining a second availability status based upon the Bluetooth wireless-based availability detector, said second availability status being based upon a Bluetooth wireless communication between the wireless-based availability detector (29) and the device (40') at a second time after the first time; and
communicating the first availability status and the second availability status to a wireless communications network via the wireless transceiver.

11. The method according to Claim 10, further comprising a Global Positioning Satellite, GPS, receiver (29') to determine the geospatial position of the wireless communications device (21').

12. The method according to Claim 11, wherein the Bluetooth wireless-based availability detector (29) is configured to cooperate with at least one input device (27) to permit association of the at least one geospatial position with the second availability status.

## Patentansprüche

1. Drahtloses Kommunikationssystem (20), das aufweist:
ein drahtloses Kommunikationsnetzwerk (35);
zumindest einen Nahfeldkommunikation(NFC - Near Field Communications)-Tag (45'), der mit einer Vorrichtung (40') assoziiert ist; und
eine Vielzahl von drahtlosen Kommunikationsvorrichtungen (21, 36), die jeweils konfiguriert sind zum Kommunizieren über das drahtlose Kommunikationsnetzwerk, wobei zumindest eine der Vielzahl von drahtlosen Kommunikationsvorrichtungen (21) aufweist:
ein tragbares Gehäuse (31),
einen drahtlosen Transceiver (24), der von dem tragbaren Gehäuse getragen wird,
eine Nahfeldkommunikation(NFC - Near Field Communications)-Vorrichtung (25), die von dem tragbaren Gehäuse getragen wird,
einen drahtlos-basierten Bluetooth-Verfügbarkeitsdetektor (29), der von dem tragbaren Gehäuse getragen wird, und
einen Prozessor (22), der von dem tragbaren Gehäuse getragen wird und konfiguriert ist zum:
Bestimmen eines ersten Verfügbarkeitsstatus basierend auf der NFC-Vorrichtung an einem ersten Zeitpunkt, wobei der erste Verfügbarkeitsstatus auf einer momentanen Nähe zwischen einem NFC-Tag (45'), der mit einer Vorrichtung (40') assoziiert ist, und der NFC-Vorrichtung (25) basiert, die von dem tragbaren Gehäuse getragen wird,
Aktivieren des drahtlos-basierten Bluetooth-Verfügbarkeitsdetektors basierend auf der NFC-Vorrichtung,
Bestimmen eines zweiten Verfügbarkeitsstatus basierend auf dem drahtlos-basierten Bluetooth-Verfügbarkeitsdetektor, wobei der zweite Verfügbarkeitsstatus auf einer drahtlosen Bluetooth-Kommunikation zwischen dem drahtlos-basierten Verfügbarkeitsdetektor (29) und der Vorrichtung (40') an einem zweiten Zeitpunkt nach dem ersten Zeitpunkt basiert, und
Kommunizieren des ersten Verfügbarkeitsstatus und des zweiten Verfügbarkeitsstatus an das drahtlose Kommunikationsnetzwerk über den drahtlosen Transceiver.

2. Das drahtlose Kommunikationssystem (20) gemäß Anspruch 1, wobei das drahtlose Kommunikationsnetzwerk (35) konfiguriert ist zum Kommunizieren des ersten Verfügbarkeitsstatus und des zweiten Verfügbarkeitsstatus an zumindest eine andere drahtlose Kommunikationsvorrichtung (21, 36).

3. Das drahtlose Kommunikationssystem (20) gemäß Anspruch 1, wobei das drahtlose Kommunikationsnetzwerk (35) konfiguriert ist zum Kommunizieren des ersten Verfügbarkeitsstatus und des zweiten Verfügbarkeitsstatus an eine Social-Networking-Seite.

4. Das drahtlose Kommunikationssystem (20') gemäß Anspruch 1, das weiter einen GPS(Global Positioning Satellite)-Empfänger (29') aufweist, um die raumbezogene Position der drahtlosen Kommunikationsvorrichtung (21') zu bestimmen.

5. Das drahtlose Kommunikationssystem (20') gemäß Anspruch 4, wobei die zumindest eine drahtlose Kommunikationsvorrichtung (21') weiter zumindest eine Eingangsvorrichtung (27') aufweist, die von dem tragbaren Gehäuse (31') getragen wird; und wobei der drahtlos-basierte Bluetooth-Verfügbarkeitsdetektor konfiguriert ist zum Kooperieren mit der zumindest einen Eingangsvorrichtung, um eine Zuordnung der zumindest einen raumbezogenen Position zu dem zweiten Verfügbarkeitsstatus zu ermöglichen.

6. Das drahtlose Kommunikationssystem (20') gemäß Anspruch 1, das weiter einen Beschleunigungsmesser (30') aufweist, der von dem Gehäuse (31') getragen wird und mit dem Prozessor (22') gekoppelt ist.

7. Drahtlose Kommunikationsvorrichtung (21, 36) zur Kommunikation mit einem drahtlosen Kommunikationsnetzwerk (35), die aufweist:
ein tragbares Gehäuse (31);
einen drahtlosen Transceiver (24), der von dem tragbaren Gehäuse getragen wird;
eine Nahfeldkommunikation(NFC - Near Field Communications)-Vorrichtung (25), die von dem tragbaren Gehäuse getragen wird;
einen drahtlos-basierten Bluetooth-Verfügbarkeitsdetektor (29), der von dem tragbaren Gehäuse getragen wird; und
einen Prozessor (22), der von dem tragbaren Gehäuse getragen wird und konfiguriert ist zum:
Bestimmen eines ersten Verfügbarkeitsstatus basierend auf der NFC-Vorrichtung an einem ersten Zeitpunkt, wobei der erste Verfügbarkeitsstatus auf einer momentanen Nähe zwischen einem NFC-Tag (45'), der mit einer Vorrichtung (40') assoziiert ist, und der NFC-Vorrichtung (25) basiert, die von dem tragbaren Gehäuse getragen wird,
Aktivieren des drahtlos-basierten Bluetooth-Verfügbarkeitsdetektors basierend auf der NFC-Vorrichtung,
Bestimmen eines zweiten Verfügbarkeitsstatus basierend auf dem drahtlos-basierten Bluetooth-Verfügbarkeitsdetektor, wobei der zweite Verfügbarkeitsstatus auf einer drahtlosen Bluetooth-Kommunikation zwischen dem drahtlos-basierten Verfügbarkeitsdetektor (29) und der Vorrichtung (40') an einem zweiten Zeitpunkt nach dem ersten Zeitpunkt basiert, und
Kommunizieren des ersten Verfügbarkeitsstatus und des zweiten Verfügbarkeitsstatus an das drahtlose Kommunikationsnetzwerk über den drahtlosen Transceiver.

8. Die drahtlose Kommunikationsvorrichtung (21, 36) gemäß Anspruch 7, die weiter einen GPS(Global Positioning Satellite)-Empfänger (29') aufweist, um die raumbezogene Position der drahtlosen Kommunikationsvorrichtung zu bestimmen.

9. Die drahtlose Kommunikationsvorrichtung (21, 36) gemäß Anspruch 8, wobei die zumindest eine drahtlose Kommunikationsvorrichtung weiter zumindest eine Eingangsvorrichtung (27) aufweist, die von dem tragbaren Gehäuse (31) getragen wird; und wobei der drahtlos-basierte Bluetooth-Verfügbarkeitsdetektor (29) konfiguriert ist zum Kooperieren mit der zumindest einen Eingangsvorrichtung, um eine Zuordnung der zumindest einen raumbezogenen Position zu dem zweiten Verfügbarkeitsstatus zu ermöglichen.

10. Verfahren zum Verwenden einer drahtlosen Kommunikationsvorrichtung (21, 36), die einen Prozessor (22) und einen drahtlosen Transceiver (24), eine NFC(Near Field Communications)-Vorrichtung (25) und einen damit gekoppelten drahtlos-basierten Bluetooth-Verfügbarkeitsdetektor (29) aufweist, wobei das Verfahren aufweist:
Bestimmen, unter Verwendung des Prozessors, eines ersten Verfügbarkeitsstatus basierend auf der NFC-Vorrichtung an einem ersten Zeitpunkt, wobei der erste Verfügbarkeitsstatus auf einer momentanen Nähe zwischen einem NFC-Tag (45'), der mit einer Vorrichtung (40') assoziiert ist, und der NFC-Vorrichtung (25) basiert;
Aktivieren, unter Verwendung des Prozessors, des drahtlos-basierten Bluetooth-Verfügbarkeitsdetektors basierend auf der NFC-Vorrichtung;
Bestimmen eines zweiten Verfügbarkeitsstatus basierend auf dem drahtlos-basierten Bluetooth-Verfügbarkeitsdetektor, wobei der zweite Verfügbarkeitsstatus auf einer drahtlosen Bluetooth-Kommunikation zwischen dem drahtlos-basierten Verfügbarkeitsdetektor (29) und der Vorrichtung (40') an einem zweiten Zeitpunkt nach dem ersten Zeitpunkt basiert; und
Kommunizieren des ersten Verfügbarkeitsstatus und des zweiten Verfügbarkeitsstatus an ein drahtloses Kommunikationsnetzwerk über den drahtlosen Transceiver.

11. Das Verfahren gemäß Anspruch 10, das weiter einen GPS(Global Positioning Satellite)-Empfänger (29') aufweist, um die raumbezogene Position der drahtlosen Kommunikationsvorrichtung (21') zu bestimmen

12. Das Verfahren gemäß Anspruch 11, wobei der drahtlos-basierte Bluetooth-Verfügbarkeitsdetektor (29) konfiguriert ist zum Kooperieren mit zumindest einer Eingangsvorrichtung (27), um eine Zuordnung der zumindest einen raumbezogenen Position zu dem zweiten Verfügbarkeitsstatus zu ermöglichen.

## Revendications

1. Système de communications sans fil (20) qui comprend :
un réseau de communication sans fil (35) ;
au moins une balise de communications en champ proche « NFC » (45') associée à un dispositif (40') ; et
une pluralité de dispositifs de communication sans fil (21, 36), chacun configuré pour communiquer via ledit réseau de communication sans fil,
au moins l'un de ladite pluralité de dispositifs de communications sans fil (21) comprenant :
un boîtier portatif (31),
un émetteur/récepteur sans fil (24) porté par ledit boîtier portatif,
un dispositif de communications en champ proche « NFC » (25) porté par ledit boîtier portatif,
un détecteur de disponibilité sans fil Bluetooth (29) porté par ledit boîtier portatif, et
un processeur (22) porté par ledit boîtier portatif et configuré pour :
déterminer un premier statut de disponibilité sur la base dudit dispositif NFC à un premier moment, le premier statut de disponibilité reposant sur une proximité momentanée entre une balise NFC (45') associée à un dispositif (40') et ledit dispositif NFC (25) porté par ledit boîtier portatif,
activer ledit détecteur de disponibilité sans fil Bluetooth sur la base dudit dispositif NFC,
déterminer un second statut de disponibilité sur la base dudit détecteur de disponibilité sans fil Bluetooth, ledit second statut de disponibilité reposant sur une communication sans fil Bluetooth entre le détecteur de disponibilité sans fil (29) et le dispositif (40') à un second moment après le premier moment, et
communiquer le premier statut de disponibilité et le second statut de disponibilité audit réseau de communications sans fil via ledit émetteur/ récepteur sans fil.

2. Système de communications sans fil (20) selon la revendication 1, dans lequel ledit réseau de communications sans fil (35) est configuré pour communiquer le premier statut de disponibilité et le second statut de disponibilité à au moins un autre dispositif de communications sans fil (21, 36).

3. Système de communications sans fil (20) selon la revendication 1, dans lequel ledit réseau de communications sans fil (35) est configuré pour communiquer le premier statut de disponibilité et le second statut de disponibilité à un site de réseau social.

4. Système de communications sans fil (20') selon la revendication 1, qui comprend en outre un récepteur satellite de positionnement global, GPS, (29') pour déterminer la position géospatiale dudit dispositif de communications sans fil (21').

5. Système de communications sans fil (20') selon la revendication 4, dans lequel ledit au moins un dispositif de communications sans fil (21') comprend en outre au moins un dispositif d'entrée (27') porté par ledit boîtier portatif (31') ; et dans lequel ledit détecteur de disponibilité sans fil Bluetooth est configuré pour coopérer avec ledit au moins un dispositif d'entrée afin de permettre l'association de l'au moins une position géospatiale au second statut de disponibilité.

6. Système de communications sans fil (20') selon la revendication 1, qui comprend en outre un accéléromètre (30') porté par ledit boîtier (31') et relié audit processeur (22').

7. Dispositif de communications sans fil (21, 36) pour communication avec un réseau de communications sans fil (35) comprenant :
un boîtier portatif (31) ;
un émetteur/récepteur sans fil (24) porté par ledit boîtier portatif ;
un dispositif de communications en champ proche, NFC, (25) porté par ledit boîtier portatif ;
un détecteur de disponibilité sans fil Bluetooth (29) porté par ledit boîtier portatif ; et
un processeur (22) porté par ledit boîtier portatif et configuré pour :
déterminer un premier statut de disponibilité sur la base dudit dispositif NFC à un premier moment, le premier statut de disponibilité reposant sur une proximité momentanée entre une balise NFC (45') associée à un dispositif (40') et ledit dispositif NFC (25) porté par ledit boîtier portatif,
activer ledit détecteur de disponibilité sans fil Bluetooth sur la base dudit dispositif NFC,
déterminer un second statut de disponibilité sur la base dudit détecteur de disponibilité sans fil Bluetooth, ledit second statut de disponibilité reposant sur une communication sans fil Bluetooth entre le détecteur de disponibilité sans fil (29) et le dispositif (40') à un second moment après le premier moment, et
communiquer le premier statut de disponibilité et le second statut de disponibilité audit réseau de communications sans fil via ledit émetteur/récepteur sans fil.

8. Dispositif de communications sans fil (21, 36) selon la revendication 7, qui comprend en outre un récepteur satellite de positionnement global, GPS, (29') pour déterminer la position géospatiale dudit dispositif de communications sans fil.

9. Dispositif de communications sans fil (21, 36) selon la revendication 8, dans lequel ledit au moins un dispositif de communications sans fil comprend en outre au moins un dispositif d'entrée (27) porté par ledit boîtier portatif (31) ; et dans lequel ledit détecteur de disponibilité sans fil Bluetooth (29) est configuré pour coopérer avec ledit au moins un dispositif d'entrée afin de permettre l'association de l'au moins une position géospatiale avec le second statut de disponibilité.

10. Procédé d'utilisation d'un dispositif de communications sans fil (21, 36) qui comprend un processeur (22), et un émetteur/récepteur sans fil (24), un dispositif de communications en champ proche, NFC, (25), et un détecteur de disponibilité sans fil Bluetooth (29) relié à celui-ci, le procédé comprenant :
la détermination, à l'aide du processeur, d'un premier statut de disponibilité sur la base du dispositif NFC à un premier moment, le premier statut de disponibilité reposant sur une proximité momentanée entre une balise NFC (45') associée à un dispositif (40') et ledit dispositif NFC (25) ;
l'activation, à l'aide du processeur, du détecteur de disponibilité sans fil Bluetooth sur la base du dispositif NFC ;
la détermination d'un second statut de disponibilité sur la base du détecteur de disponibilité sans fil Bluetooth, ledit second statut de disponibilité reposant sur une communication sans fil Bluetooth entre le détecteur de disponibilité sans fil (29) et le dispositif (40') à un second moment après le premier moment ; et
la communication du premier statut de disponibilité et du second statut de disponibilité à un réseau de communications sans fil via l'émetteur/récepteur sans fil.

11. Procédé selon la revendication 10, qui comprend en outre un récepteur satellite de positionnement global, GPS, (29') pour déterminer la position géospatiale du dispositif de communications sans fil (21').

12. Procédé selon la revendication 11, dans lequel le détecteur de disponibilité sans fil Bluetooth (29) est configuré pour coopérer avec au moins un dispositif d'entrée (27) pour permettre l'association de l'au moins une position géospatiale avec le second statut de disponibilité.
